# EUROPEAN PATENT APPLICATION

(11) **EP 4 336 605 A2**
(43) Date of publication of application: **13.03.2024**
(21) Application number: 23220025.3
(22) Date of filing: 27.11.2020
(51) Int. Cl.: H01M 8/04014

(54) **RECIRCULATED SOLID OXIDE ELECTROLYZER CELL SYSTEM AND METHOD**

(62) Divisional of application: 20828027.1
(71) Applicant: Convion Oy, 02150 Espoo (FI)
(72) Inventor: ÅSTRÖM, Kim, 02460 Kirkkonummi (FI); HAKALA, Tuomas, 00330 Helsinki (FI)
(74) Representative: Lenkkeri-Schütz, Ulla

(57) **Abstract**

An object of the invention is a recirculated solid oxide electrolyzer cell system, a cell comprising a fuel side (100), an oxygen rich side (102), and an electrolyte element (104) between the fuel side and the oxygen rich side. The system comprises at least one supersonic ejector (120) configured for recirculating (109) a fraction of gas exhausted from the fuel side (100) of each cell and for providing a desired recirculation flow rate of recirculated flow, the ejector having at least one nozzle (122); means (124) for providing at least one primary feedstock fuel fluid to said nozzle of the ejector (120), which nozzle has a convergent-divergent flow channel through which the fluid will expand from an initial higher pressure to a lower pressure; wherein the ejector (120) and possible sources of leakage are contained within structures (144) conveying non-explosive reactant to form leakage and explosive safe structure, and the system comprises a nested arrangement for at least one feed-in route (124) and an exhaust route, the arrangement being nested within the structure (144) conveying non-explosive reactant, and a trim heater (148) arranged within the structures (144) to provide heat to both fuel side (100) and oxygen rich side (102) flows.

## Description

### The field of the invention

Most of the energy of the world is produced by means of oil, coal, natural gas or nuclear power. All these production methods have their specific problems as far as, for example, availability and friendliness to environment are concerned. As far as the environment is concerned, especially oil and coal cause pollution when they are combusted. The problem with nuclear power is, at least, storage of used fuel.

Especially because of the environmental problems, new energy sources, more environmentally friendly and, for example, having a better efficiency than the above-mentioned energy sources, have been developed. Solid oxide cells operate via a chemical reaction in an environmentally friendly process and are very promising future energy conversion devices. The intermittency of renewable energy sources has introduced challenges for the electrical grid stability, calling for increased demand and supply side flexibility and new energy storage and conversion technologies. Electrolysis can serve these purposes, providing a method to generate clean hydrogen or hydrocarbons using renewable electricity as driving force. Among all electrolysis technologies, solid oxide electrolysis (SOEC) provides the highest efficiency.

### The state of the art

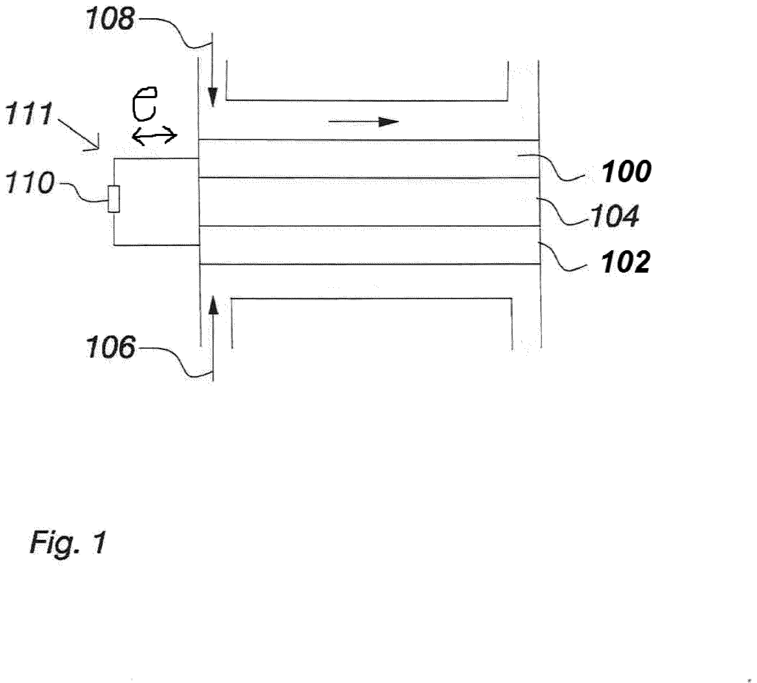

Solid oxide cell (SOC), as presented in fig 1, comprises a fuel side 100 and an oxygen rich side 102 and an electrolyte material 104 between them. In solid oxide fuel cells (SOFCs) oxygen 106 is fed to the oxygen rich side 102 and it is reduced to a negative oxygen ion by receiving electrons from the oxygen rich side. The negative oxygen ion goes through the electrolyte material 104 to the fuel side 100 where it reacts with fuel 108 producing water and also typically carbon dioxide (CO2). Fuel side 100 and oxygen rich side 102 are connected through an external electric circuit 111 comprising a load 110 for the fuel cell operating mode withdrawing electrical energy out of the system. The fuel cells also produce heat to the reactant exhaust streams. In electrolysis operating mode, current flow is reversed and the solid oxide cells act as a load to which electricity is supplied. Depending on operating conditions, the cell operation can be endothermic, exothermic or thermoneutral.

Fuel cell reactions in the case of methane, carbon monoxide and hydrogen fuel are shown below:
Fuel side:

   CH₄ + H₂O = CO + 3H₂

   CO + H₂O = CO₂ + H₂

   H₂ + O²⁻ = H₂O + 2e-
Oxygen rich side:

   O₂ + 4e⁻ = 2O²⁻
Net reactions:

   CH₄ + 2O₂ = CO₂ + 2H₂O

   CO + 1/2O₂ = CO₂

   H₂ + 1/2O₂ = H₂O

In electrolysis operating mode (solid oxide electrolysis cells, (SOEC)) the reaction is reversed, i.e. electrical energy from a source 110 is supplied to the cell where water and often also carbon dioxide are reduced in the fuel side forming oxygen ions, which move through the electrolyte material to the oxygen rich side where oxidation reaction takes place. It is possible to use the same solid oxide cell in both SOFC and SOEC modes.

Solid oxide electrolyzer cells operate at temperatures which allow high temperature electrolysis reaction to take place, said temperatures being typically between 500 - 1000 °C, but even over 1000 °C temperatures may be useful. These operating temperatures are similar to those conditions of the SOFCs. The net cell reaction produces hydrogen and oxygen gases. The reactions for one mole of water are shown below:
Fuel side:

   H₂O + 2e⁻ ---> 2 H₂ + O²⁻
Oxygen rich side:

   O²⁻ ---> 1/2O₂ + 2e⁻
Net Reaction:

   H₂O ---> H₂ + 1/2O₂.

In case of co-electrolysis, a carbonaceous species is supplied to the cell in addition to steam, typically in proportions favorable for subsequent refining of the result gas according to e.g. the Fischer-Tropsch process. Carbon dioxide can be directly reduced to carbon monoxide or can interact with hydrogen through the water-gas shift reaction to form carbon monoxide and steam.

In Solid Oxide Fuel Cell (SOFC) and Solid Oxide Electrolyzer (SOE) stacks where the flow direction of the fuel side gas relative to the oxygen rich side gas internally in each cell as well as the flow directions of the gases between adjacent cells, are combined through different cell layers of the stack. Further, the fuel side gas or the oxygen rich side gas or both can pass through more than one cell before it is exhausted and a plurality of gas streams can be split or merged after passing a primary cell and before passing a secondary cell. These combinations serve to increase the current density and minimize the thermal gradients across the cells and the whole stack.

The high operating temperature in the SOC cells and system introduce material related challenges with respect to thermomechanical forces, material properties, chemical stability and uniformity of operating conditions. These aspects place practical constraints on feasible SOC cell, stack and module sizes. Scaling the technology for large installations, typical to SOEC application, will thus primarily rely on multiplication of cells, stacks and SOC modules. Minimizing the cost of each multiplying unit at all levels is thus crucial for reducing the overall cost.

A SOC module comprises tens up to hundreds of SOC stacks, support structures, thermal insulation, reactant conveying and distribution structures, instrumentation as well as electrical and reactant interfacing towards the application or other modules. As high temperature interfaces are costly, space-consuming and may constitute an ignition source, it is also beneficial to include heat exchanging within the module to lower the temperature of the reactant interfaces. Furthermore, the SOC module needs internal or external means facilitate safe start-up and shutdown.

To avoid oxidation of the fuel side electrode, a sufficient portion of hydrogen needs to be present at the electrode inlet. During operation this can be achieved through recirculation of the fuel electrode outlet stream, or by supplementing the steam feed with hydrogen from an external source. Internal recirculation is applicable only when the SOEC is actively generating hydrogen. During system start-up or hot standby, and external hydrogen source is needed. This introduces an additional interface of explosive gas to the SOC module or its feed arrangements.

In a large installation, it is beneficial to centralize as many functions as possible, where practical, to minimize the number of components multiplying with each module. In particular, this applies for functions that do not need close thermal coupling with the high-temperature environment. This applies for air feed, steam generation and post-processing of product gases. However, with common upstream and or downstream systems it is nevertheless needed to facilitate module-specific or at least module-group specific operating state to allow for module overhaul without interrupting all operations.

The post-processing of the fuel side product gas typically includes at least drying and compression.

As the reactant streams of the electrodes in SOEC operation are not combined, it is essential to assure that excessive pressure differences over the electrolyte are avoided in all operating situations. All potential failure situations relating to reactant flow and pressure control arrangements need to be taken into account. Particularly in the case of external upstream or downstream equipment affecting the system internal pressure levels, a module specific safety release mechanism can be required to safeguard certain failure combinations.

### Short description of the invention

The object of the present invention is to achieve an advanced solid oxide cell system with improved flow conditions and with improved safety conditions. This is achieved by a recirculated solid oxide electrolyzer cell system, a cell comprising a fuel side, an oxygen rich side, and an electrolyte element between the fuel side and the oxygen rich side. The system comprises at least one supersonic ejector configured for recirculating a fraction of gas exhausted from the fuel side of each cell and for providing a desired recirculation flow rate of recirculated flow, the ejector having at least one nozzle; means for providing at least one primary feedstock fuel fluid to said nozzle of the ejector, which nozzle has a convergent-divergent flow channel through which the fluid will expand from an initial higher pressure to a lower pressure, wherein the ejector and possible sources of leakage are contained within a structure conveying non-explosive side reactant to form leakage and explosive safe structure, and the system comprises a nested arrangement for at least one feed-in route and an exhaust route, the arrangement being nested within a structure conveying non-explosive reactant, and a trim heater arranged within the structures to provide heat to both fuel side and oxygen rich side flows.

The focus of the invention is also a method of recirculated solid oxide electrolyzer cells. In the method is supersonically ejected for recirculating a fraction of gas exhausted from a fuel side of each cell and for providing a desired recirculation flow rate of recirculated flow, is provided at least one primary feedstock fuel fluid to a nozzle of an ejector to expand the fluid from an initial higher pressure to a lower pressure, and in the method is contained the ejector and possible sources of leakage within structures conveying non-explosive side reactant to form leakage and explosive safe structure, and at least one of an feed-in route and an exhaust route are located in a nested arrangement within a structure conveying non-explosive reactant, and is provided heat to both fuel side and oxygen rich side flows within the structures.

The invention is based on use of a supersonic ejector configured for recirculating a fraction of gas exhausted from the fuel side of each cell and for providing a desired recirculation flow rate of recirculated flow. At least one primary feedstock fuel fluid is provided to a nozzle of the ejector, which nozzle has a convergent-divergent flow channel through which the fluid will expand from an initial higher pressure to a lower pressure. The invention is further based on that the ejector and possible sources of leakage are contained within a structure conveying non-explosive side reactant to form leakage and explosive safe structure, and based on a nested arrangement for at least one feed-in route and an exhaust route within a structure conveying non-explosive reactant, and based on a trim heater arranged within the structures to provide heat to both fuel side and oxygen rich side flows.

The benefit of the invention is that high recirculation rate is achieved, which means small concentration gradients, more even thermal distribution and lower degradation. Also, explosion risk can be eliminated according to the invention. Furthermore, the invention allows for minimizing complexity, number of interfaces and potential sources of leakage relating to SOC modules, allowing for application level cost savings.

### Short description of figures

- Figure 1: presents a single cell structure.
- Figure 2: presents an exemplary SOC system according to the present invention. In the figure 2 line which is drawn to cross over another line is not connected to said line.
- Figure 3: presents an exemplary exemplary heat exchanger according to the present invention.

### Detailed description of the invention

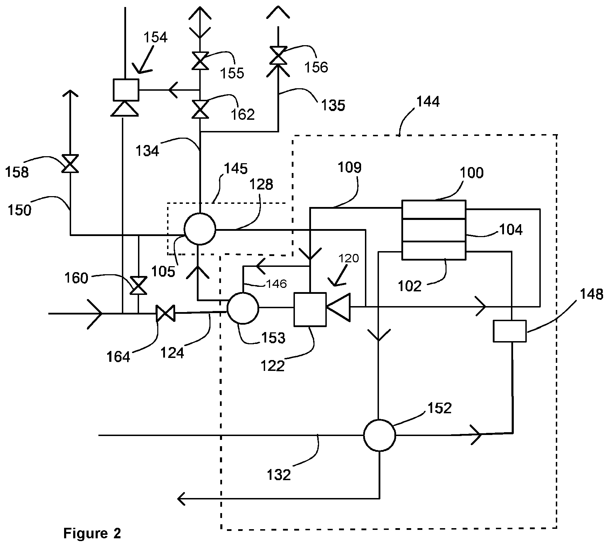

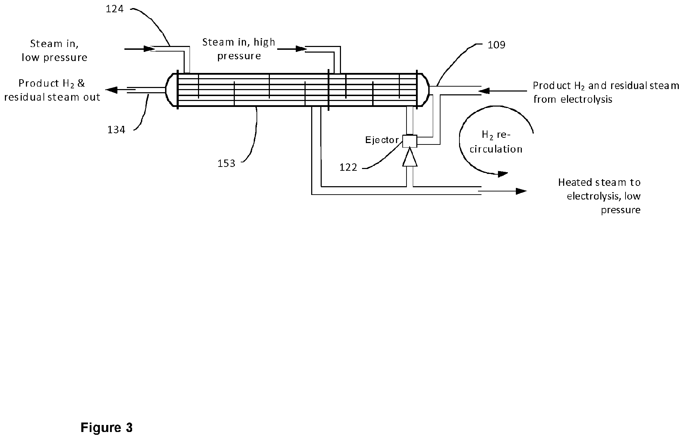

In embodiments according to the present invention is presented a recirculated solid oxide electrolyzer cell system in which a cell comprises a fuel side 100, an oxygen rich side 102, and an electrolyte element 104 between the fuel side and the oxygen rich side as presented in figure 1. The exemplary system according to the invention is presented in figure 2 and comprises at least one supersonic ejector 120 configured for recirculating 109 a fraction of gas exhausted from the fuel side of each cell and for providing a desired recirculation flow rate of recirculated flow. The ejector has at least one nozzle 122. The system comprises means 124 for providing at least one primary feedstock primary feedstock fluid to said nozzle of the ejector 120, which nozzle has a convergent-divergent flow channel through which the fluid will expand from an initial higher pressure to a lower pressure. Means 124 are for example a supply line or a storage for a gas feed stock or supply line for a liquid feed stock and means such as an evaporator for forming a gaseous fluid by evaporating the liquid as well as necessary piping connecting parallel feed stock supplies to a common feed in pipe connected to the ejector primary nozzle. Heat exchangers 105, 152 are located both in the fuel side and in the oxygen rich side feed routes. In an exemplary embodiment the system according to the present invention can comprise a heat exchanger 153 (Figs 2 and 3), which is connected to the supersonic ejector 120. Figure 3 presents the flows which said heat exchanger takes in and releases out. The system location of heat exchanger 153 is presented in figure 2. Product hydrogen and steam can flow (146, Fig 2) from electrolysis as presented in figure 3. In low pressure heated steam can flow to the electrolysis circulation 109, and steam can flow 124 into the heat exchanger 153. Product gas and residual steam can flow out through line 134. This arrangement describes benefits of a double piping structure as combined to heat recovery in the system.

The ejector 120 can block spikes in the inlet steam pressure from affecting the SOC cells. The product gas outlet is beneficially coupled with a mechanical or electrochemical compressor. The compressor shall regulate the SOC outlet pressure to a fixed value or according to a setpoint provided by the SOC control system. A buffer volume and flow restrictor elements may be needed in between depending on compressor and pressure control dynamics. A passive pressure balancing arrangement can be used to throttle one or more reactant outlet route(s) to maintain the differential pressure within allowable bounds. A gas collection pipeline network, collecting the result gas from multiple modules, can beneficially act as a buffer volume.

An air-recirculation arrangement, using a subsonic ejector to mix SOC outlet air with inlet air can be used to further improve thermal self-sufficiency and cost of air feed.

In system control the ejector can be beneficially dimensioned for a ~1:3 modulation range without moving parts. The operation window can be extended by providing a bypass line to feed a portion of primary feedstock past the ejector at high feed rates. The system according to the present invention can comprise the primary feedstock fluid and/or the bypass line 128 supplemented by a carbonaceous feedstock and/or other reducing compound. The system can heat up on heated air and/or radiative heat elements. Protecting stacks for re-oxidation by electronic fuel side protection can be performed by feeding a small electrolysis current in voltage control mode near open cell voltage (OCV) conditions. Additionally or alternatively, the feedstock steam feed can be supplemented with a small amount of hydrogen or other reducing compound, readily available in e.g. a refinery environment, at startup. The system is thermally self-balancing, converging towards a temperature where the cell resistivity provides thermoneutrality with the given current density. Particularly in steam-electrolysis, this mechanism can be beneficially used to avoid a need for excess heating. In co-electrolysis, the system can be started and brought to nominal operating temperatures in steam electrolysis mode, introducing the carbonaceous feedstock as primary or bypass feedstock once the carbon-formation temperature range has been avoided. Unlike the SOFC operating mode, the thermal management of the SOC cells in SOEC mode is insensitive to the rate of air feed. This allows for common-railing a large number of hot cores to a shared air feed and exhaust route regardless of variations in operating point, including start-up and shutdown. Thus, in one embodiment according to the present invention, the system can comprise means 130 for performing common-railing for hot cores to a shared air feed 132 and exhaust route regardless of variations in operating point. In combination with common steam supply and product gas extraction routes this allows for shared pressure balancing equipment for all common-railed hot cores, further reducing cost in large installations. This is a particular benefit in the case of pressurized SOEC modules.

In the recirculated solid oxide electrolyzer cell system according to the present invention the ejector 120 and possible sources of leakage are contained within a structure 144 conveying non-explosive side reactant, such as e.g. air or steam gas, to form leakage and explosive safe structure. The system can comprise a nested arrangement for at least one feed-in route 124 and the exhaust route, which is nested within the structure 144 conveying non-explosive reactant. Furthermore, the system according to the present invention comprises a trim heater 148 to provide heat to both fuel side 100 and oxygen rich side 102 flows. Heat exhangers and fluid conveying structures involving high surface temperatures can all be placed within the structures 144 conveying non-explosive reactant. Exemplary figure 2 presents that heat exchanger 105 can be optionally 145 within the structures 144 or not.

The hot core, containing all high-temperature equipment but no moving parts, minimum/no high temperature feedthroughs and minimum component count is an excellent building block towards large systems. Cold air supply, steam supply, product gas post-processing and the electrical power supply route can easily be centralized to megawatt-range to serve multiple cores. The low or moderate temperature interfaces or the individual hot cores are compact, inexpensive, and easy to handle, allowing for easy disconnection and "hot" swapping of individual hot cores. The cost, complexity and component count relating to the multiplying hardware (SOC stacks + dedicated balance of plant) in a large-scale system is minimized, thus optimizing both capital and operational expenditure. The benefits of the ejector-recirculated integrated hot core are apparent both in the case of an atmospheric or pressurized operating point. The atmospheric operation avoids complexity in the SOEC module structures and air supply, allowing to minimize its cost. A pressurized system, in turn, provides apparent benefits in the product gas pressurization. The cold and gas-tight outer shell of the symmetric integrated hot core can easily be adapted to a pressure vessel shape capable of handling high pressures. The high-temperature internal parts, where only small differential pressures are present, can be maintained essentially unaffected by the pressurization.

The system according to the present invention can comprise a bypass line 128 for extending operation window of the system by providing a portion of primary feedstock past the ejector 120 at high feed rates. The bypass line can be 128 arranged co-axially with the exhaust route 132 to contain explosive mixture inside a non-explosive supply. 3D-printing of ejector structures can be used to facilitate the desired alignment of the flow routes. The system according to the present invention can comprise an enclosed and internally insulated hot core to eliminate hot feedthroughs. The enclosed and internally insulated hot core without hot feedthroughs eliminates the risk of hot surfaces external to the module. The hot cores can be EX-classified to allow for flexible placement e.g. in a refinery environment. The structure is beneficial for both atmospheric and pressurized operation.

In an exemplary embodiment the system can also comprise a low temperature and gas-tight outer shell of the hot core to be adapted to a pressure vessel shape capable of handling high pressures. A pressure relief arrangement, providing quick pressure balancing and/or releasing towards atmospheric or the air outlet line can be included to safeguard possible pressure control abnormalities. The waste-gate can also be used during system startup or shutdown conditions.

The system according to the present invention can comprise compressorturbine arrangement 142 of the air feed 132 controlled to avoid fast pressure changes. In such a case, the pressure differential release mechanism can connect the fuel side and oxygen rich side outlet-streams in case of pressure control anomalies.

In one embodiment according to the present invention cell stacks 103 can be arranged so that part of cells operates in SOEC mode and another part of the cells operates in SOFC mode. In a reversible (SOFC) mode, the steam supply is replaced by hydrogen or preferably hydrocarbon supply, using same supply and preheating means as for SOEC supply gas. The same ejector can provide the required recirculation in both modes. To balance the difference in primary flows, a bypass is used in SOEC mode.

During system start-up, fuel feed can be supplemented by steam to maintain suitable volume flow in the ejector primary and for oxygen-to-carbon ratio management. Alternatively, air can be used as supplemental feedstock to facilitate catalytic partial oxidation (CPOx) operation.

The above described supplemental steam feed line can also be supplemented with a carbon containing, e.g. CO2 feedstock. This allows for operating the system in co-electrolysis mode whilst still being able to start the system in pure steam electrolysis mode. Thus, carbon formation issues relating to low temperatures at startup can be avoided. To prevent carbon formation in the cooldown of the result gas, supplemental steam may be injected to the result gas extraction line. An ejector structure can be used for the injection, providing efficient mixing and allowing for boosting the pressure to overcome pressure losses in downstream components, allowing for a more compact design thereof.

The exemplary system according to the present invention can comprise an external afterburner arranged in parallel with a product gas line 134 (Fig 2). Due to good thermal self-sufficiency of the ejector-recirculated design, the afterburner can be placed on the pressure relief line, i.e. outside of the hot core, thus avoiding hot valve arrangements and additional equipment. The afterburner can be arranged in parallel 135 with the SOEC product gas pressurization stage by using e.g. a simple non-return valve 156 (Fig 2) to redirect the flow when the compressing is stopped. Another non-return valve 155 is located in the parallel product gas line 134.

The CO2 can be captured from the fuel side outlet stream upstream of the burner. Alternatively to the burner, the residual H2 and CO can be recirculated back to the system feed or recovered for other purposes. Thus, the system achieves zero carbon emissions or negative net carbon emissions if biogas is used as source.

Alternatively, a passive non-return valve functionality can be implemented in the hot environment to facilitate partial or full thermal burning in SOFC mode, whereas in SOEC mode, the pressure is regulated such that the route is closed.

The SOC cells and stacks are preferably connected in electrical series comprising hundreds of cells to allow for a cost-efficient connection to industrial DC or AC distribution levels.

In preferred embodiments according to the present invention, the moduleinternal ejector recirculated concept can be utilized to facilitate explosion-safe start-up hydrogen supplement without need for an external hydrogen interface. By arranging a secondary release route from the fuel side recirculation loop, it is possible to use steam as entraining force in an ejector to entrain hydrogen rich mixture from the product gas line. The secondary release route can also function as a safety mechanism to avoid adverse pressure conditions at the solid oxide cells in case of pressure control abnormalities.

In an exemplary embodiment according to the present invention the system can comprise a controllable secondary release route 134 from the fuel side to the ambient. This release route functions as a safety mechanism in case of pressure control abnormalities. During start-up, the release route is kept open while steam is supplied to the ejector primary. The therethrough generated suction towards the hydrogen extraction line causes reverse (inward) flow in said line, thus supplementing the steam in the recirculation loop with a hydrogen rich mixture from the application side result of a gas distribution network. The hydrogen extraction line may include a fixed or controllable flow restriction element for pressure balancing during normal operation. The flow restriction in the reverse flow configuration may be dimensioned to passively give rise to a nonexplosive mixture of the entraining steam and the entrained hydrogen, thus allowing for a completely passive maintaining of explosion safe conditions in the recirculation loop during an emergency shutdown, given that external steam feed and the external hydrogen collection networks remain operational. This eliminates not only the need for a module specific startup hydrogen feed connection but also the need for active module specific shutdown reoxidation protection means. In one exemplary embodiment the system can comprise a supplemental ejector 154 driven by a steam feed to entrain hydrogen rich fluid in reverse flow from the outlet gas interface. A preferable embodiment is to place this ejector in series with the main fuel recirculation ejector 120. Thus, the supplemental ejector entrains hydrogen-rich fluid to an intermediate pressure level, still sufficient for driving the main ejector. In figure 2 is presented means 158, i.e. a valve, to direct flow to the secondary release route 150. Same means can also be used for controlling the pressure difference between fuel and oxygen side in normal operation. The means 158 can also be used to control the hydrogen fraction in the fuel side recirculation when hydrogen is entrained from the product gas line through ejector 154, by recirculating a portion of the fuel side outlet flow 134 to said ejector. Control valves 160, 164 can be used to enable the reverse flows in the secondary release route 150. With a steam supply pressure of e.g. 3-3.5 bar(g), the intermediate pressure can be in the range of 1-1.5 bar(g), whereby supercritical conditions can be obtained in both ejectors, giving a very predictable performance. Particularly in the supplemental ejector, designed for a fixed low entrainment in the range of 0.05-0.2, the mixing ratio of hydrogen and steam becomes highly predictable and independent of small variations in the pressure level on the suction side. In this embodiment, the secondary release route can be arranged along the product gas line or the supplemental steam feed line, if present. A benefit of both embodiments is that the provision of safety gas can be arranged passively, eliminating the possibility of a single device failure to give rise to a hazardous mixture. To prevent possible buildup of leaking hydrogen from the fuel side in the conveying structures in the event of an air side supply disruption, an additional steam driven ejector may be utilized to facilitate emergency ventilation within the module. For example, an exhaust route from the top of the hot core module may be arranged to pass through a highentrainment mode steam driven ejector to the ambient. In normal operation, when the module is actively flushed by e.g. oxygen side reactant, only a small amount of hydrogen from possible leakages is expected to accumulate in the compartment top. Thus, the primary feed of the ejector can be kept off, whereby a small exhaust flow, driven by the overpressure inside the module, is obtained. In emergency mode, the primary steam feed can passively be activated whereby the outward flow is amplified, thus increasing the capability to remove accumulated hydrogen. Matching this flow with the amount of hydrogen entrained by the previously described steam driven hydrogen ejector, it is possible to passively safeguard sufficient removal of hydrogen even in the case of 100% leakage. As both the hydrogen feed and removal rely on the same primary source of ene, i.e. steam, the combination has no dangerous failure modes.

A further benefit of the arrangement is that explosive zones can be avoided within and around the SOC modules. As a separate hydrogen feed line is avoided, explosive species are only present in low pressure pipelines. A suitable pressure level for the result gas collection line is e.g. 30 mbarg. Such low pressure limits the extent of explosive mixture volumes that can arise around sources of leakage, whereby natural ventilation can suffice for classifying the explosive areas as "negligible extent", avoiding the need for costly explosion protection arrangements and equipment. This also greatly simplifies provisions for making e.g. maintenance on individual modules, when adjacent modules or pipelines remaining in operation do not cause an explosion risk.

If e.g. in a refinery setting, the modules are to operate in an area which may contain explosive gases, the invention is beneficial for obtaining an explosion-safe classification. The low temperature of interfaces provide inherent protection against e.g. hydrogen ignition temperatures and minimized amount of module specific equipment allows for straight-forward explosion protection. With minimized amount of components external to the hot module, ventilation requirements are also minimized. Centralized airfeed, the supplied air being non-explosive, can be utilized to ventilate and overpressurize compartments, whereby EX-classification of components as well as separate means to monitor the presence of the ventilation can be omitted. Electrical equipment requiring high ventilation can be placed external to the modules in a non-explosive environment, or in enclosed overpressurized cabinets with liquid cooling.

In another exemplary embodiment according to the present invention the system can be configured for reverse operation comprising means for fuel feed through at least one of a primary feed route 124 and a supplemental feed route 128, i.e. a bypass line, depending on the available pressure level. The means for fuel feed can be performed e.g. by dimensioning the primary feed ejector 120 for a high-efficiency and high entrainment ratio. Thus, this ejector can provide the required circulation in both operation modes even without steam supplementing in SOFC mode. In case of a low pressure feedstock such as biogas, the required recirculation is then obtained by feeding steam to the primary ejector. The fuel side outlet gas in case of SOFC operation can be injected either to the product gas line or to the secondary release route. The ejector-based circulation allowing for eliminating thermal losses in the fuel side recirculation facilitates good thermal self-sufficiency of the hot balance of plant, even in the absence of an afterburner to aid pre-heating of reactants. Thus, fuel cell mode operation can take place without need for supplemental heating. As the power conversion stages have been dimensioned for high current densities in SOEC operation, they are inherently capable of high current densities also in SOFC mode, thus able to bring the current density high enough for thermal self-sufficiency even in beginning of life conditions. The capability to supplement the fuel side recirculation with steam overcomes issues relating carbon formation in the event of otherwise insufficient recirculation rates.

In the exemplary embodiment according the present invention, in order to further minimize the complexity relating to multiplying SOC modules, it is beneficial to centralize the supply of sweep air (oxygen rich side reactant) to the system. Pressurization, filtering and possible drying are thus implemented in larger scale, allowing cost savings and reliability improvements. At low temperatures, low pressure air supply network for the SOC modules can be implemented at low cost. Furthermore, the centrally provided air can also be used for compartment overpressurization, explosion safety ventilation and cooling of e.g. automation equipment, thus eliminating the need for module specific means and related failure detection safeguards to perform said functions.

In embodiments according to the present invention, in SOEC operation it is beneficial to operate the cells with a uniform temperature profile, i.e. near thermoneutral conditions, to maximize the utilization of the cell active area. This can be achieved by the relatively high fuel side recirculation rate obtainable with the ejector based circulation. Moreover, the circulation reduces the concentration gradients across the fuel side electrode, promoting a more even distribution of current density across the cell. It is beneficial to heat up the incoming reactants on both sides near to the operating conditions. The ejector-based integration concept allows for arranging the SOC stacks in an essentially symmetrical arrangement around a central axis, providing equal flow paths for the reactant supply and thus even conditions to all cells. Furthermore, a heater element or array of elements can beneficially be placed within the symmetry to provide heat up of both fuel side and oxygen side reactants within the conveying structures. The inlet area of the stacks can be used as heat exchange surface for transferring the heat to the reactants. The metallic interconnect plates of stacks, typically extending exterior to the active area of cells, together constitute a very large heat transfer area to which heat can be effectively transferred through radiation from an e.g. electrical heating element. The symmetric arrangement facilitates equal heat delivery to all locations. Thus, the desired heat transfer can be obtained without dedicated heat transfer structures. Preferably, to manage the temperatures of the stacks, a model based approach with real time calculation of thermal equilibrium is beneficial as physical temperature measurements can provide misleading indications in the arrangement.

A further optimization of system operations can be obtained by applying recirculation also on the oxygen rich side. One or more subsonic ejectors can be used to recirculate outlet reactant back to the oxygen rich side inlet, thus reducing the need of fresh feed of oxygen reactant whilst reducing the oxygen concentration gradient between cell inlet and outlet. If there is a need for pure oxygen, oxygen can be separated from the oxygen-enriched outlet gas. Separation can be accomplished using e.g. a separation membrane. The oxygen depleted, nitrogen rich retentate from the separation could then be supplied back to the SOC system in mixture with air. The reduced oxygen concentration of such a feed has a beneficial effect on the cell voltages. The nitrogen-rich stream could also come from another source.

In embodiments according to the present invention, when operating the SOC system in fuel cell mode, the outlet gas from the fuel side electrode can be routed to the product gas distribution, where it is either combusted in an afterburner, or the carbon dioxide is separated, whereby the residual hydrogen and carbon monoxide can be re-utilized or circulated back to the system gas feed. As in the fuel cell mode, carbon dioxide is formed on the fuel side electrode without mixing with the oxygen rich side reactant, its concentration in fuel side outlet gas is high, making separation attractive. If operating on a carbon-neutral fuel such as biogas, capturing the outlet carbon dioxide yields a negative carbon footprint operation. The captured carbon dioxide can subsequently be used as e.g. feedstock for the production of e-fuels or other synthetic hydrocarbons.

In the embodiments according to the present invention, the post-processing of the fuel cell operating mode can be performed so that outlet gas can be accomplished either along the product gas collection line or along the secondary release route. In both cases, provided that all parallel connected modules are operating in the same direction, these functions can be centralized.

As a conclusion it can be stated that several benefits can be obtained by the steam-driven ejector recirculated SOC according to the present invention. High recirculation rate facilitates small concentration gradients, more even thermal distribution and lower degradation. In co-electrolysis, high recirculation rate reduces risk of carbon formation through reduction of local concentration variance at the SOC outlets. Thermal management and modulation range can be improved because there are no high-temperature feedthroughs and no heat losses in hydrogen recirculation, and thus compact and symmetrical arrangement can be achieved with a shape naturally well suited for placement in a pressure vessel. Elimination of explosion risk can be achieved by inherent double-piping, leak flushing within hot parts, avoidance of hot surfaces outside the enclosed system core, avoidance of high-pressure explosive gas interfaces and use of centrally supplied clean air for compartment venting and overpressurization. The steam inlet can be arranged coaxially with product gas outlet to facilitate beneficial thermal transfer and extend the double piping to the feeds.

Summarizing, the invention relates to:
1. Recirculated solid oxide electrolyzer cell system, a cell comprising a fuel side (100), an oxygen rich side (102), and an electrolyte element (104) between the fuel side and the oxygen rich side, characterized by, that the system comprises at least one supersonic ejector (120) configured for recirculating (109) a fraction of gas exhausted from the fuel side (100) of each cell and for providing a desired recirculation flow rate of recirculated flow, the ejector having at least one nozzle (122); means (124) for providing at least one primary feedstock fuel fluid to said nozzle of the ejector (120), which nozzle has a convergent-divergent flow channel through which the fluid will expand from an initial higher pressure to a lower pressure;
   wherein the ejector (120) and possible sources of leakage are contained within structures (144) conveying non-explosive reactant to form leakage and explosive safe structure, and the system comprises a nested arrangement for at least one feed-in route (124) and an exhaust route, the arrangement being nested within the structure (144) conveying non-explosive reactant, and a trim heater (148) arranged within the structures (144) to provide heat to both fuel side (100) and oxygen rich side (102) flows.
2. Recirculated solid oxide electrolyzer cell system in accordance with (1), **characterized** by, that the system comprises a controllable secondary release route (150) from the fuel side to the ambient.
3. Recirculated solid oxide electrolyzer cell system in accordance with (1), **characterized** by, that the system comprises a supplemental ejector (154) driven by a steam feed to entrain hydrogen rich fluid in reverse flow from the outlet gas interface.
4. Recirculated solid oxide electrolyzer cell system in accordance with (1), **characterized** by, that the system is configured for reverse operation comprising means for fuel feed through at least one of a primary feed route (124) and a supplemental feed route (128) depending on the available pressure level.
5. Recirculated solid oxide electrolyzer cell system in accordance with (1), **characterized** by, that the system comprises means (130) for performing common-railing for hot cores to a shared air feed (132) and exhaust route regardless of variations in operating point.
6. Recirculated solid oxide electrolyzer cell system in accordance with (1), **characterized** by, that the system comprises an enclosed and internally insulated hot core to eliminate hot feedthroughs.
7. Recirculated solid oxide electrolyzer cell system in accordance with (1), **characterized** by, that the system comprises a low temperature and gas-tight outer shell of a hot core to be adapted to a pressure vessel shape capable of handling high pressures.
8. Recirculated solid oxide electrolyzer cell system in accordance with (1), **characterized** by, that the system comprises cell stacks (103) arranged to a part of cells capable of operating in SOEC mode and arranged to another part of cells capable of operating in SOFC mode.
9. Recirculated reversible solid oxide cell system in accordance with (1), **characterized** by, that the system comprises an external afterburner arranged in parallel (135) with a product gas line (134).
10. A method of recirculated solid oxide electrolyzer cells, **characterized** by, that in the method is supersonically ejected for recirculating (109) a fraction of gas exhausted from a fuel side (100) of each cell and for providing a desired recirculation flow rate of recirculated flow, is provided at least one primary feedstock fuel fluid to a nozzle of an ejector (120) to expand the fluid from an initial higher pressure to a lower pressure, and in the method is contained the ejector (120) and possible sources of leakage within structures (144) conveying non-explosive reactant to form leakage and explosive safe structure, and at least one of an feed-in route (124) and an exhaust route (132) are located in a nested arrangement within a structure (144) conveying nonexplosive reactant, and is provided heat to both fuel side and oxygen rich side flows within the structures (144).
11.A method of recirculated solid oxide electrolyzer cells in accordance with (10), **characterized** by, that in the method is controlled reactants in a secondary release route from the fuel side to the ambient.
12. A method of recirculated solid oxide electrolyzer cells in accordance with (10), **characterized** by, that in the method is driven by a steam feed to entrain hydrogen rich fluid in reverse flow from the outlet gas interface.
13. A method of recirculated solid oxide electrolyzer cells in accordance with (10), **characterized** by, that in the method is operated inversely cell system operation by feeding fuel feed through at least one of a primary feed route (124) and a supplemental feed route (128) depending on the available pressure level.
14. A method of recirculated solid oxide electrolyzer cells in accordance with (10), **characterized** by, that in the method is performed common-railing for hot cores to a shared air feed (132) and exhaust route regardless of variations in operating point.
15. A method of recirculated solid oxide electrolyzer cells in accordance with (10), **characterized** by, that in the method is enclosed and internally insulated a hot core to eliminate hot feedthroughs.
16. A method of recirculated solid oxide electrolyzer cells in accordance with (10), **characterized** by, that in the method is adapted a low temperature and gas-tight outer shell of a hot core to a pressure vessel shape capable of handling high pressures.
17. A method of recirculated solid oxide electrolyzer cells in accordance with (10), **characterized** by, that in the method is arranged cell stacks (103) to a part of cells which are operated in SOEC mode and to another part of cells which are operated in SOFC mode.
18. A method of recirculated solid oxide electrolyzer cells in accordance with (10), **characterized** by, that in the method an external afterburner is arranged in parallel (135) with a product gas line (134).

## Claims

1. Recirculated solid oxide electrolyzer cell system, a cell comprising a fuel side (100), an oxygen rich side (102), and an electrolyte element (104) between the fuel side and the oxygen rich side, **characterized by**, that the system comprises at least one supersonic ejector (120) configured for recirculating (109) a fraction of gas exhausted from the fuel side (100) of each cell and for providing a desired recirculation flow rate of recirculated flow, the ejector having at least one nozzle (122); means (124) for providing at least one primary feedstock fluid to said nozzle of the ejector (120), which nozzle has a convergent-divergent flow channel through which the fluid will expand from an initial higher pressure to a lower pressure;
wherein the ejector (120) and possible sources of leakage are contained within structures (144) conveying non-explosive reactant to form leakage and explosive safe structure, and the system comprises a nested arrangement for at least one feed-in route (124) and an exhaust route (133), the arrangement being nested within the structure (144) conveying non-explosive reactant, and a trim heater (148) arranged within the structures (144) to provide heat to both fuel side (100) and oxygen rich side (102) flows, and the system further comprising a bypass line (128) for extending operation window of the system by providing a portion of primary feedstock past the ejector (120) at high feed rates.

2. Recirculated solid oxide electrolyzer cell system in accordance with claim 1, **characterized by**, that the bypass line (128) is being arranged co-axially with an exhaust route (133) to contain explosive mixture inside a non-explosive supply.

3. Recirculated solid oxide electrolyzer cell system in accordance with claim 1, **characterized by**, that the system comprises a controllable secondary release route (150) from the fuel side to the ambient.

4. Recirculated solid oxide electrolyzer cell system in accordance with claim 1, **characterized by**, that the system comprises means (130) for performing common-railing for hot cores to a shared air feed (132) and exhaust route regardless of variations in operating point.

5. Recirculated solid oxide electrolyzer cell system in accordance with claim 1, **characterized by**, that the system comprises an enclosed and internally insulated hot core to eliminate hot feedthroughs.

6. Recirculated solid oxide electrolyzer cell system in accordance with claim 1, **characterized by**, that the system comprises a low temperature and gas-tight outer shell of a hot core to be adapted to a pressure vessel shape capable of handling high pressures.

7. Recirculated solid oxide electrolyzer cell system in accordance with claim 1, **characterized by**, that the system comprises cell stacks (103) arranged to a part of cells capable of operating in SOEC mode and arranged to another part of cells capable of operating in SOFC mode.

8. Recirculated reversible solid oxide cell system in accordance with claim 1, **characterized by**, that the system comprises an external afterburner arranged in parallel (135) with a product gas line (134).

9. A method of recirculated solid oxide electrolyzer cells, **characterized by**, that in the method:
is contained the ejector (120), at least one of an feed-in route (124) and an exhaust route (133) and other possible sources of leakage within structures (144) conveying non-explosive reactant to dilute leakages to explosion-safe levels,
- entrainment of a fraction of gas exhausted from a fuel side of each cell is performed using a supersonic ejector for providing a desired recirculation flow rate of recirculated flow
- is provided at least one primary feedstock fluid to a nozzle of an ejector (120) to expand the fluid from an initial higher pressure to a lower pressure, is provided heat to both fuel side and oxygen rich side flows within the structures (144), and in the method is extended the operation window of the system by bypassing a portion of the primary feedstock past the ejector 120 at high feed rates.

10. A method of recirculated solid oxide electrolyzer cells in accordance with claim 9, **characterized by**, that in the methodis performed the bypassing co-axially with the exhaust route (133) to contain explosive mixture inside a non-explosive supply.

11. A method of recirculated solid oxide electrolyzer cells in accordance with claim 9, **characterized by**, that in the method is controlled reactants in a secondary release route from the fuel side to the ambient.

12. A method of recirculated solid oxide electrolyzer cells in accordance with claim 9, **characterized by**, that in the method is performed common-railing for hot cores to a shared air feed (132) and exhaust route regardless of variations in operating point.

13. A method of recirculated solid oxide electrolyzer cells in accordance with claim 9, **characterized by**, that in the method is enclosed and internally insulated a hot core to eliminate hot feedthroughs.

14. A method of recirculated solid oxide electrolyzer cells in accordance with claim 9, **characterized by**, that in the method is adapted a low temperature and gas-tight outer shell of a hot core to a pressure vessel shape capable of handling high pressures.

15. A method of recirculated solid oxide electrolyzer cells in accordance with claim 9, **characterized by**, that in the method is arranged cell stacks (103) to a part of cells which are operated in SOEC mode and to another part of cells which are operated in SOFC mode.

16. A method of recirculated solid oxide electrolyzer cells in accordance with claim 9, **characterized by**, that in the method an external afterburner is arranged in parallel (135) with a product gas line (134).
